# EUROPEAN PATENT APPLICATION

(11) **EP 0 879 758 A2**
(43) Date of publication of application: **25.11.1998**
(21) Application number: 98303894.4
(22) Date of filing: 18.05.1998
(51) Int. Cl.: B64B 1/06, B64D 17/02

(54) **Parachute balloon**

(30) Priority: 19.05.1997 US 858322
(71) Applicant: Hyashi, Masahiko, Setagaya-ku, Tokyo (JP)
(72) Inventor: Hyashi, Masahiko, Setagaya-ku, Tokyo (JP)
(74) Representative: Andrews, Timothy Stephen

(57) **Abstract**

The present invention relates to a parachute balloon. The parachute balloon (12) of the invention comprises an envelope (1), a gondola (10), attached to the lower part of said envelope, and parachute means (36) attached to the envelope. The parachute enables the balloon to descend safely.

## Description

The present invention relates to a balloon with parachute means attached thereto.

An envelope of a balloon or airship according to the prior art can be collapsed and put away when not in use, and has combined with a durable outer surface, an inner skin with high air-tightness or thermal resistance.

However, it can take a lot of effort and time to inflate and expand the balloon to the size of the envelope. Moreover, because the envelope is made of flexible material, its rigidity is low, and it is difficult to improve its resistance against wind or flight performance. Additionally, it is difficult to control the direction and speed of descent.

Therefore, it is an object of the present invention to provide a balloon with parachute means externally attached thereto (hereinafter a 'parachute balloon') capable of being collapsed and put away when not in use.

It is another object of the present invention to provide a parachute balloon with more rigidity, and capable of easy operation to just supply gas, such as air, helium or hydrogen into a flexible gas storage tube which doubles as a frame and is capable of maintaining the inflated condition of the envelope.

It is a further object of the present invention to provide a parachute balloon which can descend safely in that its direction and speed during descent can be better controlled.

According to the invention, there is provided a balloon comprising: an envelope having the general shape of a balloon or an airship when inflated; a gondola attached to the bottom part of the envelope; and parachute means attached to the envelope. Preferably said envelope is capable of being collapsed and put away when not in use.

Accordingly, the parachute balloon can descend safely and slowly without the use of any peculiar power devices because the parachute is opened during descent.

The parachute balloon can be floated and flown as usual, and the envelope of the parachute balloon can be collapsed and put away when not in use. Additionally, it can be put away and kept in a small space.

In a preferred embodiment of the invention, the parachute balloon includes a flexible gas storage tube attached to the envelope, so as to maintain the inflated condition of the envelope, and a supply-hold device for gas such as air, helium or hydrogen into the gas storage tube. The envelope can be maintained in an inflated condition because the flexible gas storage tube is supplied with gas and inflated. Therefore, the envelope can be inflated easily and simply.

The gas within the gas storage tube is pulled out, the envelope can be collapsed and put away, and kept in a small space at the same as noted above. The flight performance and the resistance against wind of the parachute balloon can be improved greatly yet it is able to maintain rigidity in spite of its simple structure and light weight.

Moreover, the parachute balloon can be manufactured easily because its structure is simple. Additionally, the parachute balloon using the burner, such as a hot-air balloon, can be used safely with the burner because the mouth is kept open by the gas storage tube.

The above and other objects and features of the present invention will be understood by reading carefully the following description in conjunction with the accompanying drawings.

Preferred embodiments of the present invention will be described in more detail referring to the accompanying drawings. The drawings are illustrative and are not to be limitative of the scope of the present invention.
Fig. 1 shows a front view of a first embodiment of the present invention;
Fig. 2 shows a top view of a first embodiment of the present invention;
Fig. 3 shows an expanded cross-sectional view taken along the line 3-3 of Fig. 1;
Fig. 4 shows an expanded cross-sectional view taken along the line 4-4 of Fig. 1;
Fig. 5 shows an explanation view showing how air is supplied according to a first embodiment of the present invention;
Fig. 6 is an explanation view showing a balloon according to a first embodiment of the present invention descending to the left;
Fig. 7 is an explanation view showing a balloon according to a first embodiment of the present invention descending to the right;
Fig. 8 is an explanation view showing a balloon acccording to a first embodiment of the present invention descending in a forward direction;
Fig. 9 is an explanation view showing a balloon according to a first embodiment of the present invention descending substantially vertically downwards;
Fig. 10 shows a front view of a second embodiment of the present invention;
Fig. 11 shows a top view of a second embodiment of the present invention;
Fig. 12 shows a front view of a third embodiment of the present invention;
Fig. 13 shows a top view of a third embodiment of the present invention;
Fig. 14 shows a side view of a fourth embodiment of the present invention;
Fig. 15 shows a front view of a fourth embodiment of the present invention;
Fig. 16 is an explanation view showing a fourth embodiment of the present invention descending to the left;
Fig. 17 is an explanation view showing a fourth embodiment of the present invention descending to the right;
Fig. 18 is an explanation view showing a fourth embodiment of the present invention descending in a forward direction;
Fig. 19 shows a front view of a fifth embodiment of the present invention;
Fig. 20 shows a top view of a fifth embodiment of the present invention;
Fig. 21 is an explanation view of a balloon according to a fifth embodiment of the invention descending while rotating in a clockwise direction;
Fig. 22 is an explanation view of a balloon according to a fifth embodiment of the invention descending while rotating in an anticlockwise direction;
Fig. 23 is an explanation view of a balloon according to a fifth embodiment of the invention descending in a forward direction;
Fig. 24 is an explanation view of a balloon according to a fifth embodiment of the invention descending vertically downwards;
Fig. 25 is a perspective view of a sixth embodiment of the present invention;
Fig. 26 is a partly cut-away front view of a sixth embodiment of the present invention;
Fig. 27 is a perspective view of a seventh embodiment of the present invention;
Fig. 28 is a bottom view of a seventh embodiment of the present invention;
Fig. 29 shows a perspective view of an eighth embodiment of the present invention;
Fig. 30 shows a bottom view of an eighth embodiment of the present invention;
Fig. 31 shows a front view of a ninth embodiment of the present invention;
Fig. 32 shows a bottom view of a ninth embodiment of the present invention;
Fig. 33 is a side view showing a sail running device according to a ninth embodiment of the present invention;
Fig. 34 is a bottom view showing a sail running device of a ninth embodiment of the present invention;
Fig. 35 shows a front view of a tenth embodiment of the present invention;
Fig. 36 shows a bottom view of a tenth embodiment of the present invention;
Fig. 37 is a bottom view showing a sail running device according to a tenth embodiment of the present invention;
Fig. 38 shows a front view of an eleventh embodiment of the present invention;
Fig. 39 shows a cross-sectional view of an eleventh embodiment of the present invention;
Fig. 40 is a partly cut-away front view of a twelfth embodiment of the present invention;
Fig. 41 is a partly cut-away front view showing a thirteenth embodiment of the present invention;
Fig. 42 shows a front view of a fourteenth embodiment of the present invention;
Fig. 43 shows a front view of a fifteenth embodiment of the present invention;
Fig. 44 shows a partly cut-away front view of a sixteenth embodiment of the present invention;
Fig. 45 shows a perspective view of a seventeenth embodiment of the present invention;
Fig. 46 shows a perspective view of an eighteenth embodiment of the present invention;
Fig. 47 shows a front view of a nineteenth embodiment of the present invention;
Fig. 48 shows a bottom view of a nineteenth embodiment of the present invention;
Fig. 49 shows a front view of a twentieth embodiment of the present invention;
Fig. 50 shows a bottom view of a twentieth embodiment of the present invention;
Fig. 51 shows a front view of a twenty-first embodiment of the present invention; and
Fig. 52 shows a bottom view of a twenty-first embodiment of the present invention.

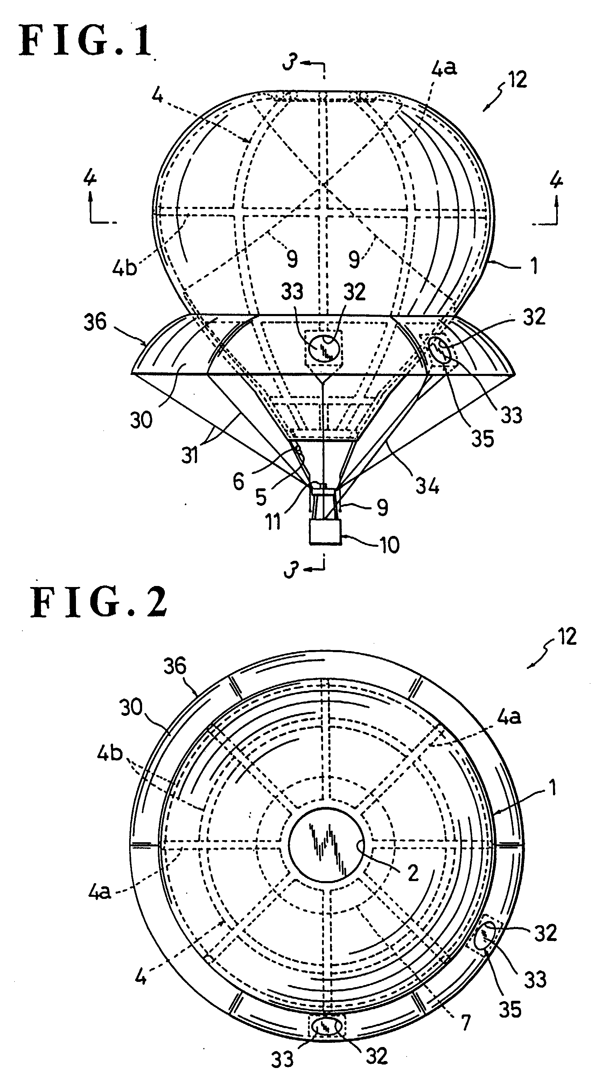

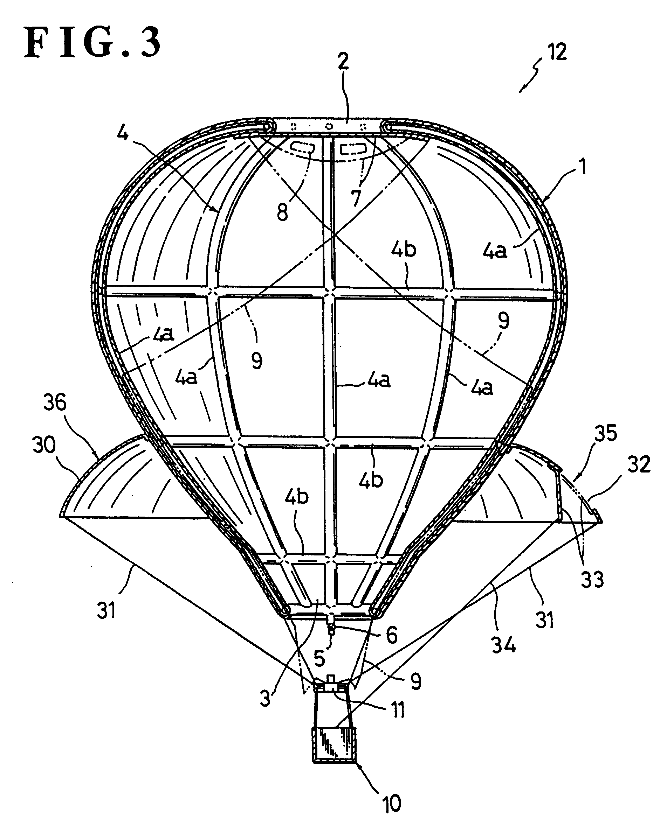

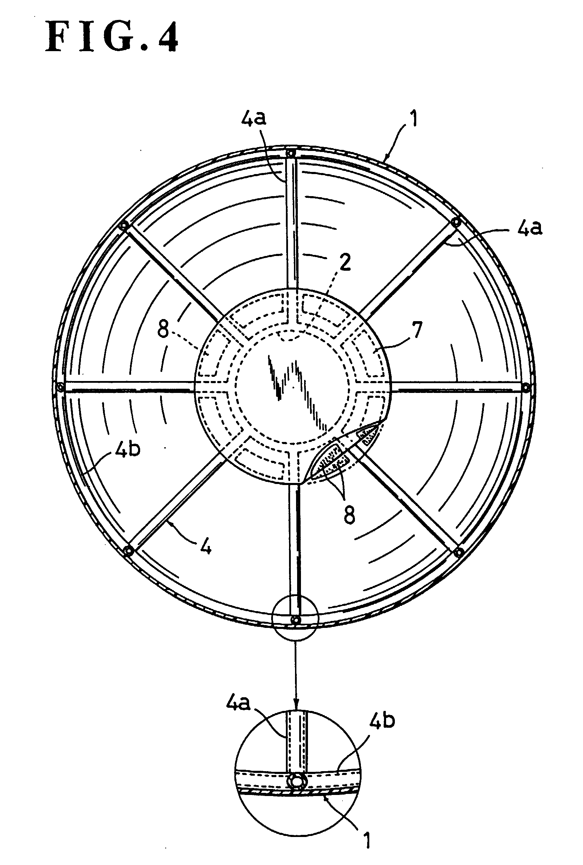

Figs. 1 to 9 illustrate one embodiment of the present invention. Envelope 1 takes the usual shape of the envelope of a hot-air balloon. A release valve 2 for heat release is formed in the upper part of the envelope 1, and a mouth 3 to introduce a heat therein is formed in the lower part of the envelope 1. Preferably, the envelope is made from material such as nylon or polyester with resinous coating in order to improve air-tightness and protection from degradation.

A flexible gas storage tube 4 is attached to the envelope 1 and doubles as a frame thereof. The flexible gas storage tube 4 may maintain the inflated condition of the envelope 1. The flexible gas storage tube 4 comprises a plurality of vertical gas storage tubes 4a equally spaced in a vertical manner in all around the envelope 1, a plurality of horizontal gas storage tubes 4b in the shape of a ring at the horizontal way at fixed spaces around the envelope 1, and an open-shut valve 6, is attached to a gas injection hole 5 formed in the lower part of the horizontal gas storage tube 4b, as a supply-hold device for gas such as air, helium or hydrogen into the vertical and horizontal gas storage tubes 4a and 4b. Also the horizontal gas storage tubes 4b are connected directly to the vertical gas storage tubes 4a. In addition, the horizontal gas storage tubes 4b are provided with slight measuring intervals in the mouth 3 as to be able to maintain to the shape of the mouth 3.

A parachute vent 7 is attached to the envelope 1 by a face fastener, the function of said vent is to open and close the release valve 2. Additionally, a valve line 9 is attached to the parachute vent 7 for the operation of said vent, said valve line projecting from the mouth 3 of the envelope 1.

A gondola 10 is suspended from the lower extremity of the envelope 1. In addition, a burner 11, to heat air within the envelope 1, is attached to the gondola 10.

The envelope 1 is provided with a parachute 36, having a device 35 for controlling the direction of descent. The parachute 36 comprises a parachute body 30 in the shape of a skirt and a plurality of support ropes 31. The inner part of the parachute body 30 is sewn on to the outer part of the envelope 1, below its centre. One end of the each of the support ropes 31 is attached to the outer part of the parachute body 30 at fixed spaces; the other end is attached to the gondola 10. The parachute 36, which increases the air resistance of the parachute balloon 12, is supported by the support ropes 31.

The device for controlling the direction of descent 35 comprises two air vents 32, 32, open-close valves 33, 33 and operation ropes 34, 34. Two air vents 32, 32 are mounted to one side part of the parachute body 30, 45° to 90° apart. The open-close valves 33, 33 are sewn on the parachute body 30 for the purpose that each of air vents 32, 32 can be opened and closed. The operation ropes 34, 34 are attached to the two open-close valves 33, 33; the operator can operate each operation rope 34 from the gondola 10 open and close the open-close valves 33, 33.

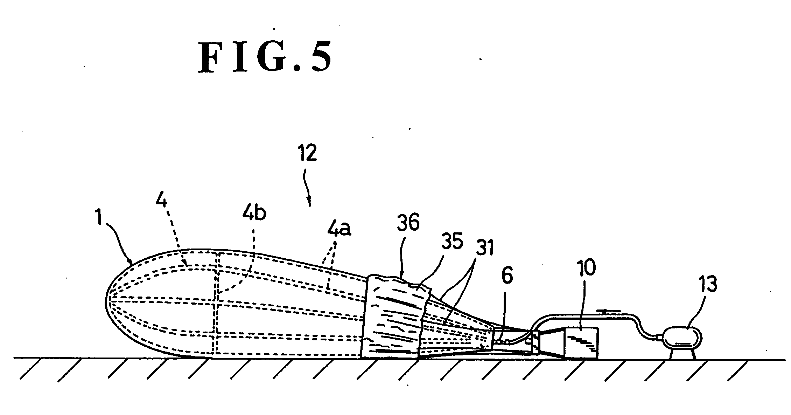

In use, the envelope 1 is expanded. To inflate the envelope 1, gas is supplied into the horizontal gas storage tubes 4b and vertical gas storage tubes 4a using air pump 13 (see Fig. 5) through the gas injection hole 5. The gas injection hole 5 is closed by the open-shut valve 6 after the envelope 1 is inflated.

Secondly, hot air is supplied into the envelope 1 using the burner 11 on the gondola 10, and the envelope 1 is made to rise. The parachute balloon 12 can then be floated and flown, as in the prior art.

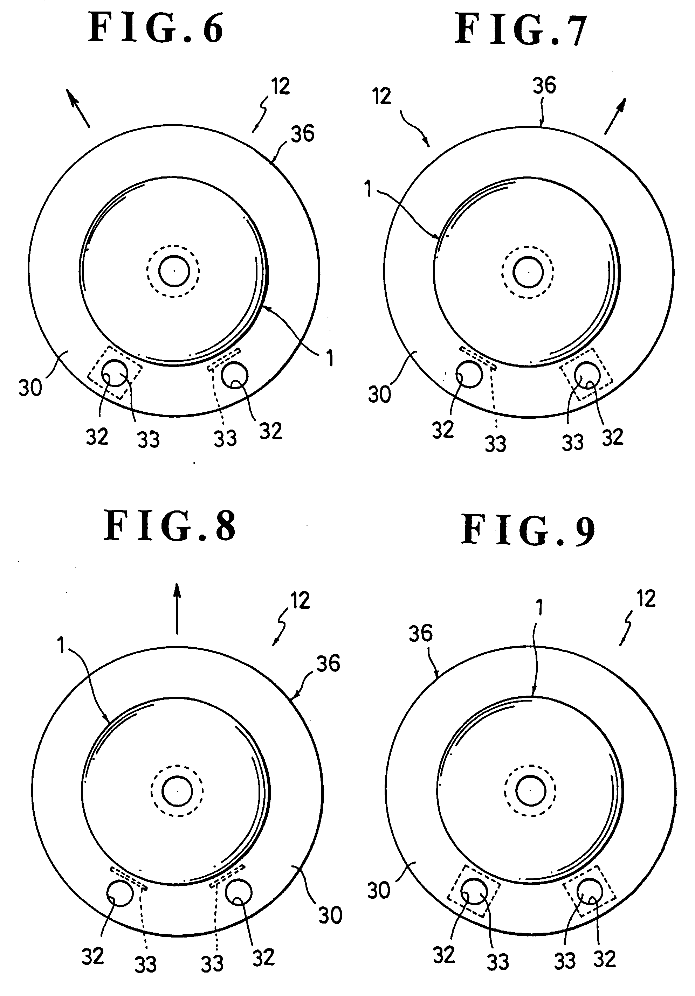

The parachute balloon 12 begins to descend when the burning of the burner 11 is stopped, and the air temperature within the envelope 1 drops; at this point the parachute body 30 spreads. When the right open-close valve 33 of the control device 35 for direction of descent is opened by the operation rope 34, and only the right air vent 32 is opened, the parachute balloon 12 descends to the left side, as shown in Fig. 6. When the left open-close valve 33 is opened by the operation rope 34, and only the left air vent 32 is opened, the parachute balloon 12 descends to the right side, as shown in Fig. 7. When both of the air vents 32, 32 are opened, the parachute balloon 12 descends in a forward direction, as shown in Fig. 8. When both of the air vents 32, 32 are closed, the direction of descent of the parachute balloon 12 cannot be controlled, but the speed of descent is slowed down, as shown in Fig. 9.

When the balloon is not in use, the open-shut valve 6 is opened and the gas injection hole 5 is made open, the gas, for example air, helium or hydrogen is expelled from the vertical and horizontal gas storage tubes 4a and 4b. Thereafter, the envelope 1 is similar to those in the prior art and can be collapsed and put away.

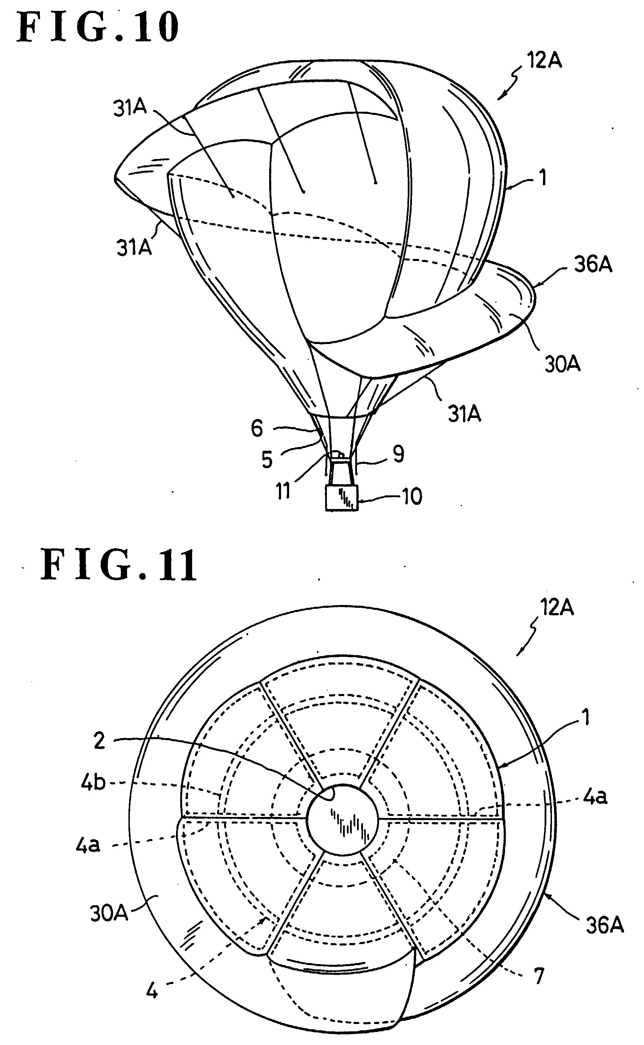

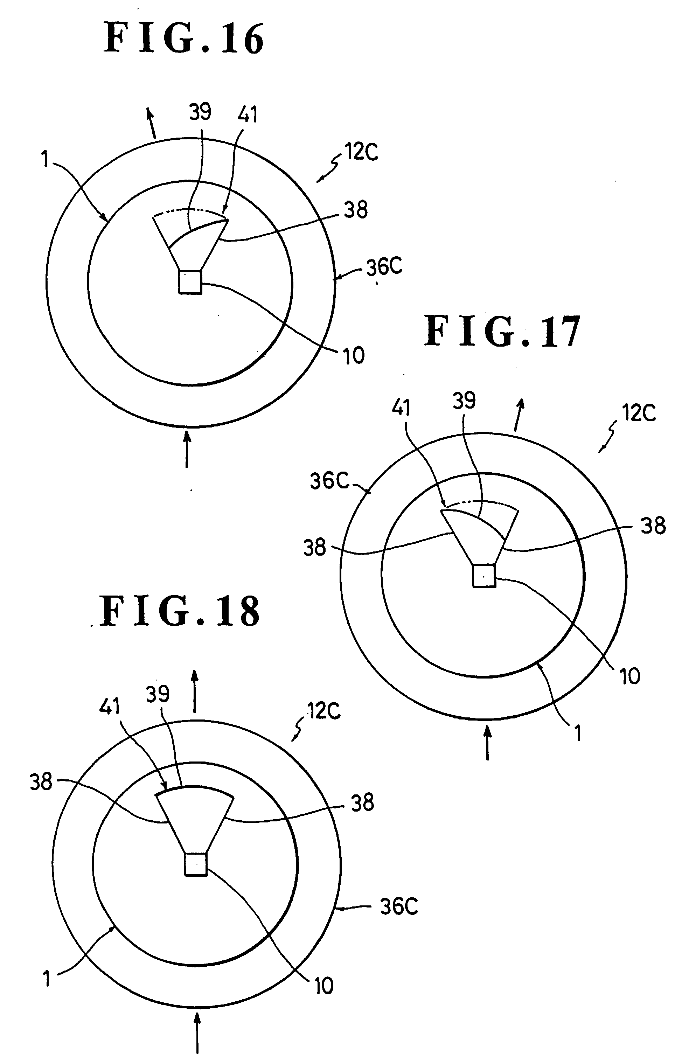

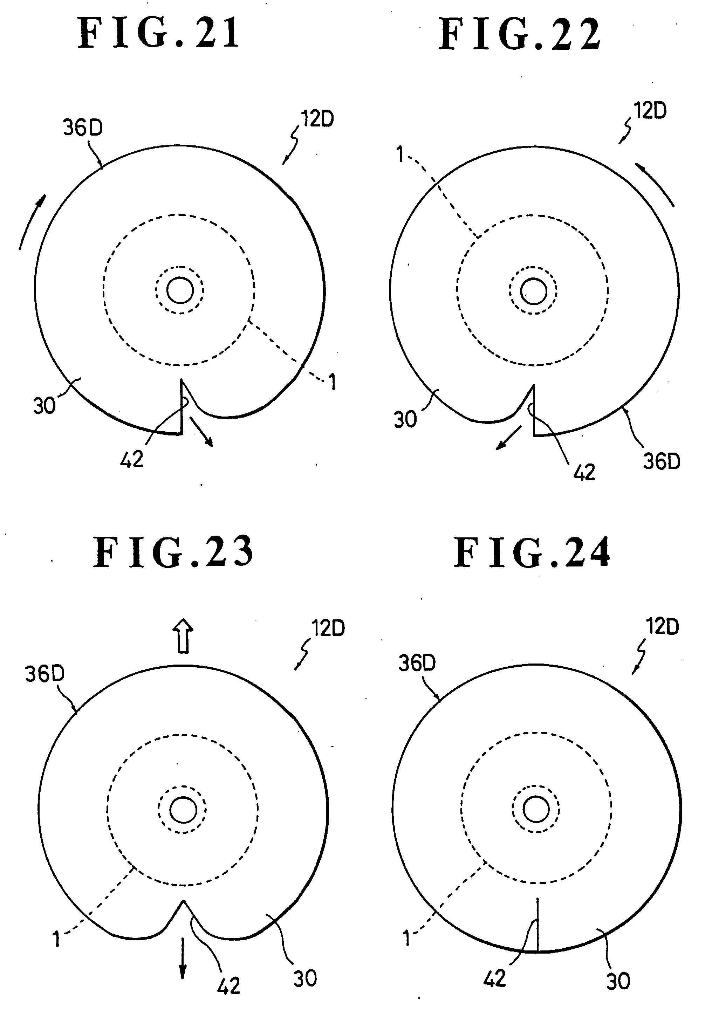

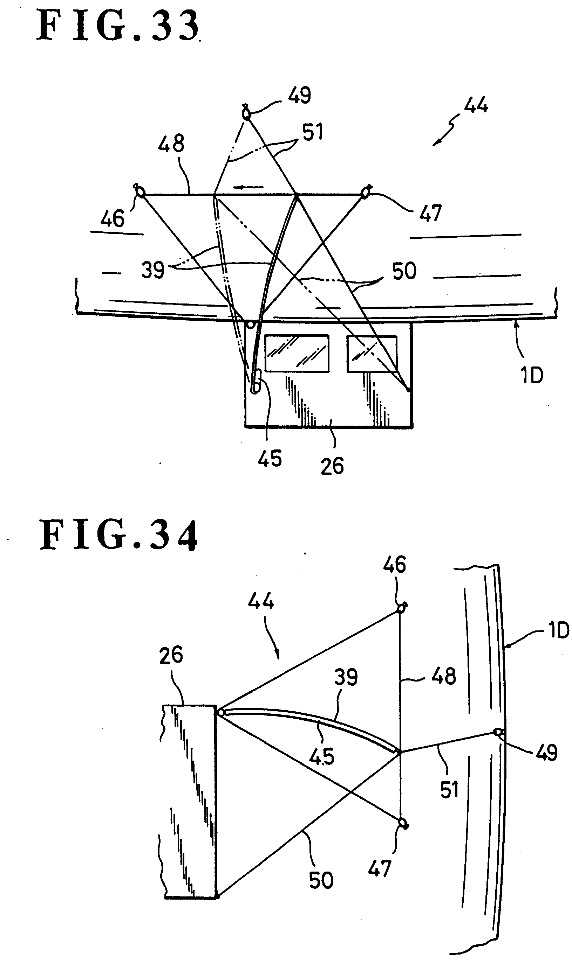

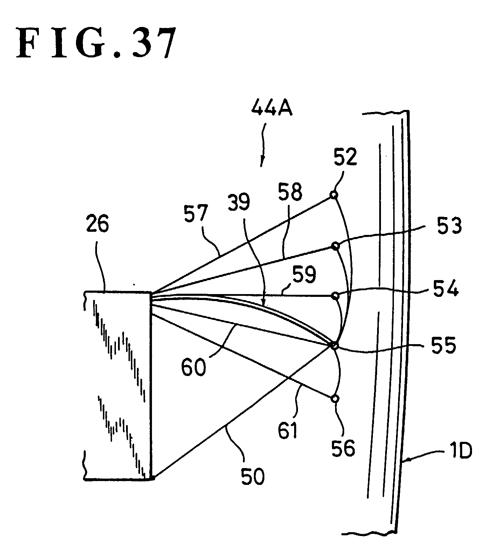

Other embodiments of the present invention will now be described referring to Figs. 10 to 52. Through the drawings of the embodiments, like components are denoted by like numerals as of the first embodiment and will be explained in no more detail.

A second embodiment of the present invention is shown in Figs. 10 to 11. It is distinguished from the first embodiment by the fact that the parachute 36 is replaced with a helical parachute 36A. The helical parachute 36A comprises a parachute body (30A) in the shape of a helix and a plurality of support ropes 31A. The inside edge of the parachute body 30A is fixed to sew on the outer part of the envelope 1.

The plurality of support ropes 31A support air-resistance added to the parachute body 30A. One end of each of the support ropes 31A is attached to outer part of the helical parachute body 30A at fixed intervals; the other end is attached to the envelope 1. A parachute balloon 12A with the parachute in the shape of spiral 36A according to the second embodiment will have similar advantages to that according to the first embodiment; in addition the parachute balloon 12A can rotate on descent.

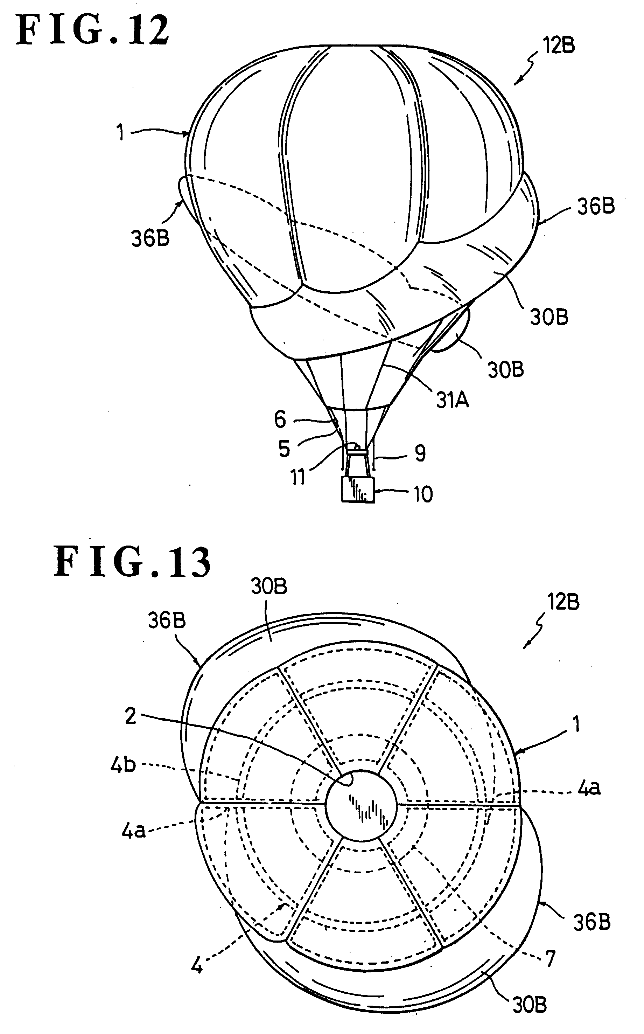

A third embodiment of the present invention is shown in Figs. 12 to 13. It is distinguished from the second embodiment by the fact that the helical parachute 36A is replaced with a pair of parachutes 36B, 36B. The pair of parachutes 36B, 36B comprises two parachute bodies in the shape of an arc 30B, 30B. The parachute bodies 30B, 30B are fixed so as to sew on the outside of the envelope 1 so that they face one another. A parachute balloon 12B with the pair of parachutes 36B, 36B according to the third embodiment will have similar advantages to that according to the second embodiment.

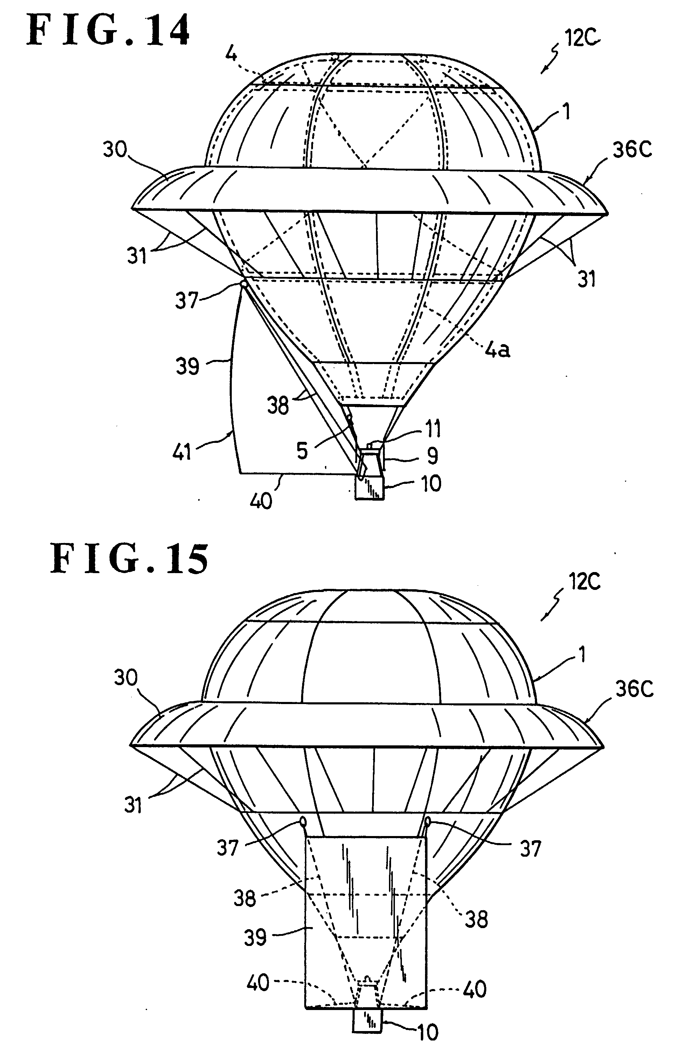

A fourth embodiment of the present invention is shown in Figs. 14 to 18. It is distinguished from the first embodiment by the fact that a parachute 36C in the shape of a skirt and a sail running device 41 are attached to the parachute balloon 12. The skirt-shaped parachute 36C is attached to the outer part of the envelope 1, about halfway up. The sail running device 41 comprises a pair of O-rings or small pulleys, (the O-rings 37, 37 selected in this embodiment) a pair of ropes 38, 38 for operating the device, a sail 39, and sail supporting ropes 40, 40. The O-rings 37, 37 are attached at fixed positions less than halfway up the envelope 1. The ends of the pair of ropes 38, 38 for operating the device are connected to the gondola 10 through the O-rings 37, 37. The upper part of sail 39 is attached to the ends of ropes 38, 38. One end of each of sail support ropes 40, 40 are attached to the bottom corners of the sail 39, and the other end of each of the sail support ropes 40, 40 is attached to the gondola 10. A parachute balloon 12C with the skirt-shaped parachute 36C, and the sail running device 41 according to the fourth embodiment will have similar advantages to that according to the first embodiment.

In addition, the parachute balloon 12C can descend slowly by using the parachute 36C; it can be flown to the right and left when either of the operating ropes 38, 38 of the sail running device 41 is loosened. The sail 39 can assist the flight of the balloon 12C when the wind is in the desired direction when the sail 39 is suspended by pulling up both of operating ropes 38, 38. If the wind is unfavourable, the sail 39 can be put away by lengthening both the operating ropes 38, 38.

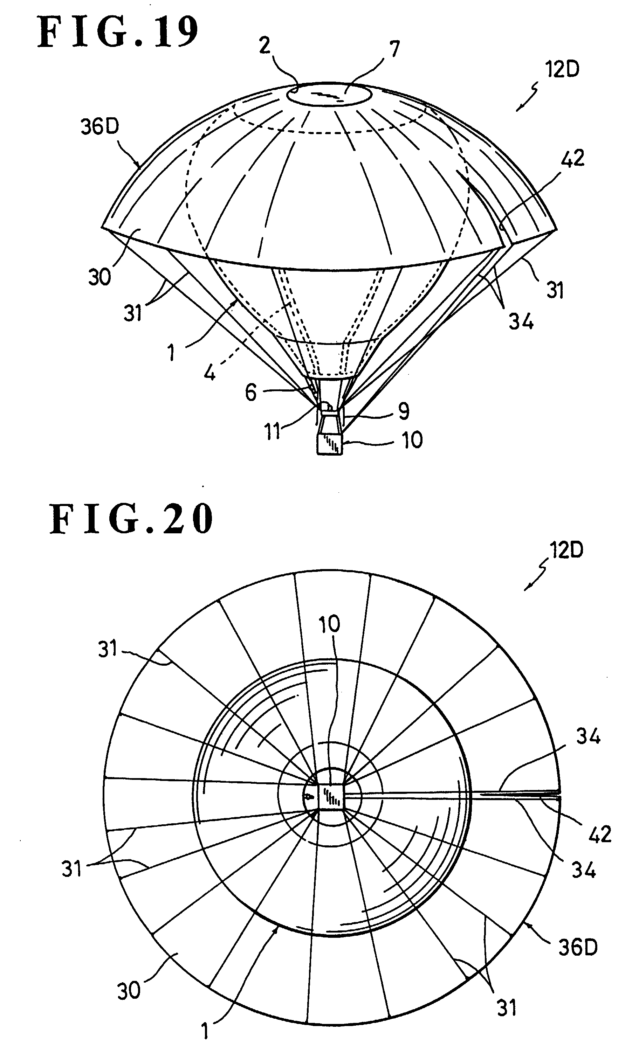

A fifth embodiment of the present invention is shown in Figs. 19 to 24. It is distinguished from the first embodiment by the fact that the parachute 36 is replaced with another similar parachute 36D, and the operation ropes 34, 34 are attached thereto. The parachute in the shape of umbrella 36D is attached to the envelope 1; there is provided a slit 42, to control direction of descent at outer part of the parachute body 36D. The operating ropes 34, 34 are attached near to the edge of the slit 42. The slit 42 can be opened by the operation ropes 34, 34, and are operated from the gondola 10. A parachute balloon 12D according to the fifth embodiment will have similar advantages to that according to the first embodiment.

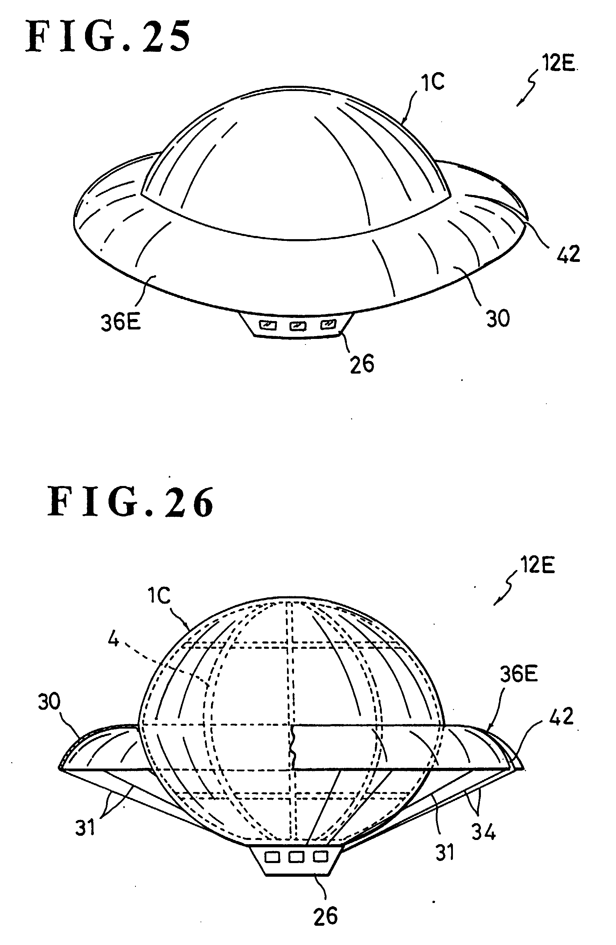

A sixth embodiment of the present invention is shown in Figs 25 to 26. It is distinguished from the fifth embodiment by the fact that the parachute 36D is replaced with another similar parachute 36E in the shape of the brim of a hat. The parachute 36E is attached approximately halfway up the envelope 1C, said envelope is in the shape of 'balloon ship', *i.e.* a sphere shape slightly flattened at the bottom. A parachute balloon 12E with the balloon-ship shaped like a UFO according to the sixth embodiment will have similar advantages to that according to the fifth embodiment.

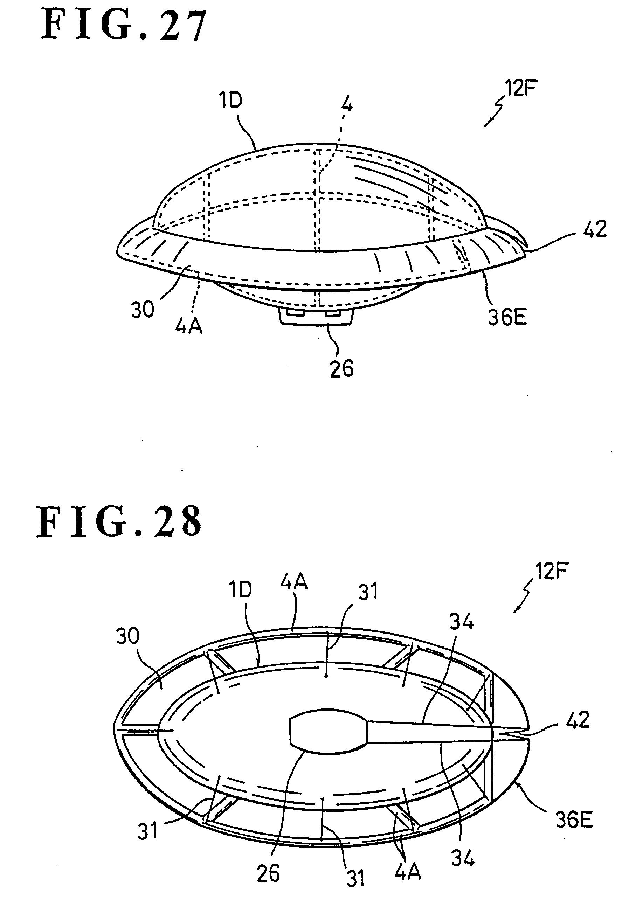

A seventh embodiment of the present invention is shown in Figs. 27 to 28. It is distinguished from the sixth embodiment by the fact that the envelope 1C is replaced with another similar envelope 1D in the shape of an oval, and in that a parachute 36E, having a contractable gas tube 4A, is attached to the outer part of the envelope 10. A parachute balloon 12F with the envelope 1D according to the seventh embodiment will have similar advantages to that according to the sixth embodiment. Additionally, the contractable gas tube 4A thereof may be formed separately from the contractable gas tube 4 of the envelope 10, or may form as to pass through the contractile gas tube 4.

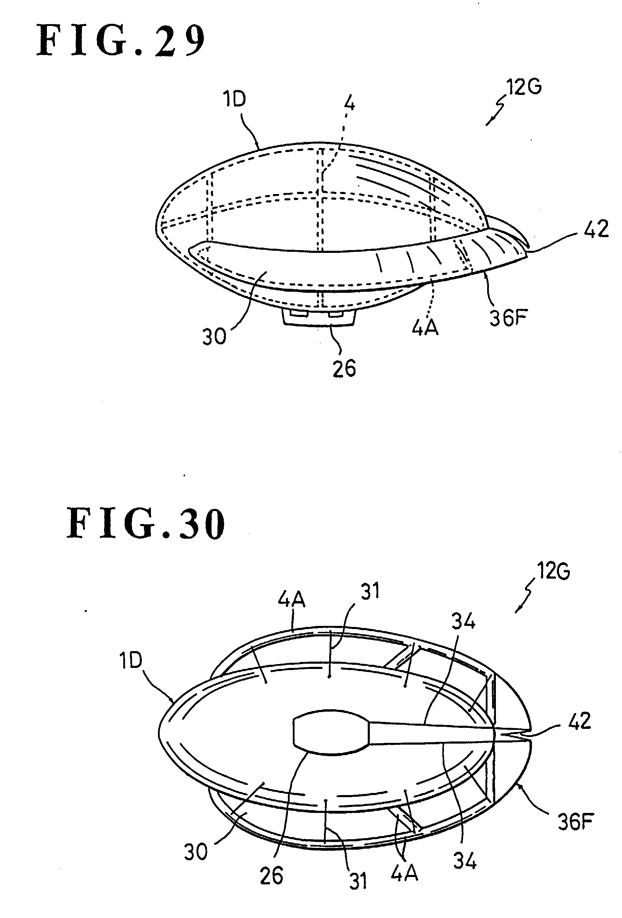

An eighth embodiment of the present invention is shown in Figs 29 to 30. It is distinguished from the seventh embodiment by the fact that a parachute 36F is attached at a position remote from the tip part of the envelope 1D. Collapse of the parachute 36F during flight of parachute balloon 12G according to the eighth embodiment can be prevented.

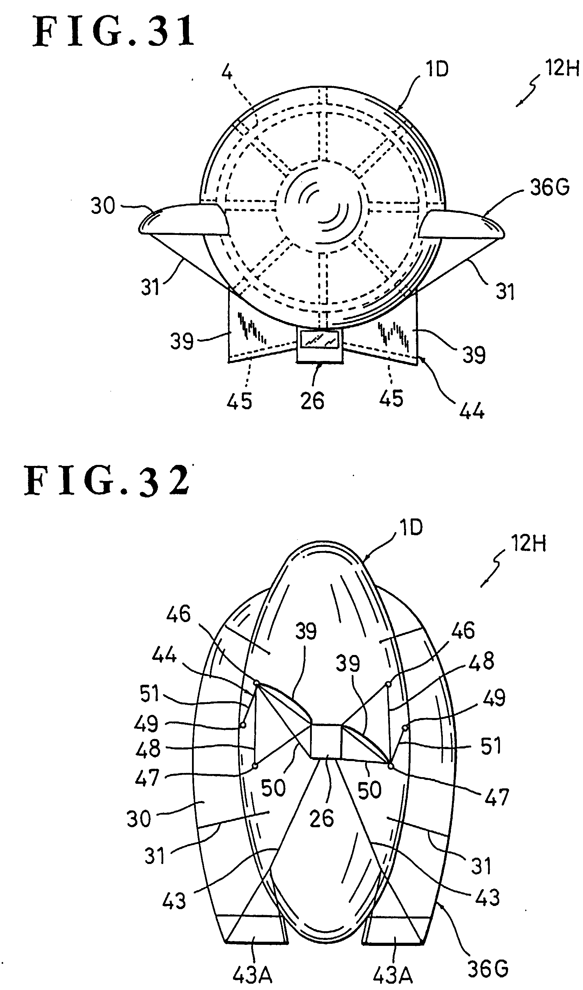

A ninth embodiment of the present invention is shown in Figs. 31 to 34. It is distinguished from the eighth embodiment by the fact that the parachute 36F is replaced by another similar parachute 36G, and a sail running device 44 is attached. The parachute 36G is attached to operating ropes 43, 43 connected to the distal corner of flaps 43A, 43A. This enables the user, from the gondola 26, to control the direction of descent. Said gondola 26 is in the shape of cabin and is separated from the envelope 1D.

direction of flight of parachute balloon 12H with the parachute 36G and the sail running device 44 according to the ninth embodiment can be controlled more easily by using the sail.

Moreover, the sail running device 44 comprises sails 39, 39, front-rear rings 46, 47, 46 and 47 in left and right, operating ropes in the shape of a loop 48, 48, left and right rings 49, 49, a pulling rope 50 and an opposite pulling rope 51 on the left side, and a pulling rope 50 and an opposite pulling rope 51 on the right side.

The bottom parts of the sails 39, 39 are reinforced by an air tube 45. The left and right front-rear rings 46, 47, 46 and 47 are attached to the front and rear parts of the envelope 1D on both sides of the gondola 26. The operating ropes in the shape of loop 48, 48 pass through the front-rear rings in left 46, 47 and the front-rear rings on the right 46, 47. Therefore, the operator can control the sail 39 from the gondola 26.by using the operating ropes in the shape of loop 48,48. The left and right rings 49,49 are attached to the envelope 1D at opposite positions to the outer part of the left and right front-rear rings 46, 46, 47 and 47. The left pulling rope 50 is attached to the operating rope 48 provided between the left front-rear ring 46 and 47, and the opposite pulling rope 51 passes through the left ring 49 and is pulled to the opposite side from the gondola 26. The right pulling rope 50 is attached to the operation rope 48 provided between the right front-rear ring 46 and 47 and the opposite pulling rope 51 passes through the right ring 49 and is pulled to the opposite side at the gondola 26.

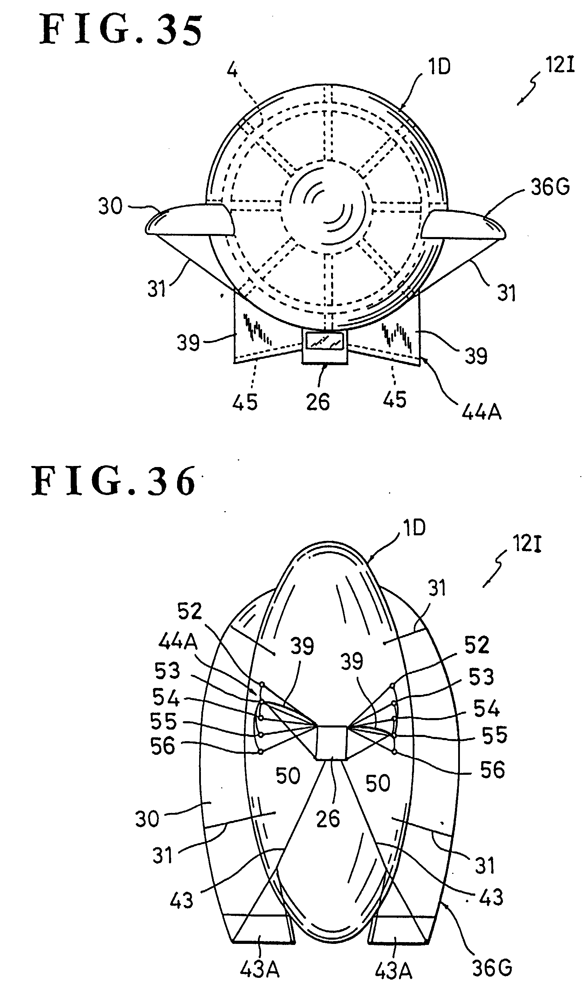

A tenth embodiment of the present invention is shown in Figs. 35 to 37. It is distinguished from the ninth embodiment by the fact that the sail running device 44 is replaced with another similar sail running device 44A which comprises a plurality of rings, that is, five left and right rings 52, 53, 54, 55 and 56, and operation ropes 57, 58, 59, 60 and 61. Five left and right rings 52, 53, 54, 55 and 56 are located on the envelope 1D (with correspond place in front and rear parts) on both sides of the gondola 26. The operation ropes 57, 58, 59, 60 and 61 pass through the left-right rings 52, 53, 54, 55 and 56, and are attached to the end of the sails 39, 39. A parachute balloon 12I with the sail running device 44A according to the tenth embodiment will have similar advantages to that according to the ninth embodiment. Moreover, in the case of the parachute balloon 12I, the position of the sails 39, 39 can be changed when the operator pulls any of the five left or right operation ropes 57, 58, 59, 60 and 61, and other operation ropes are loosened.

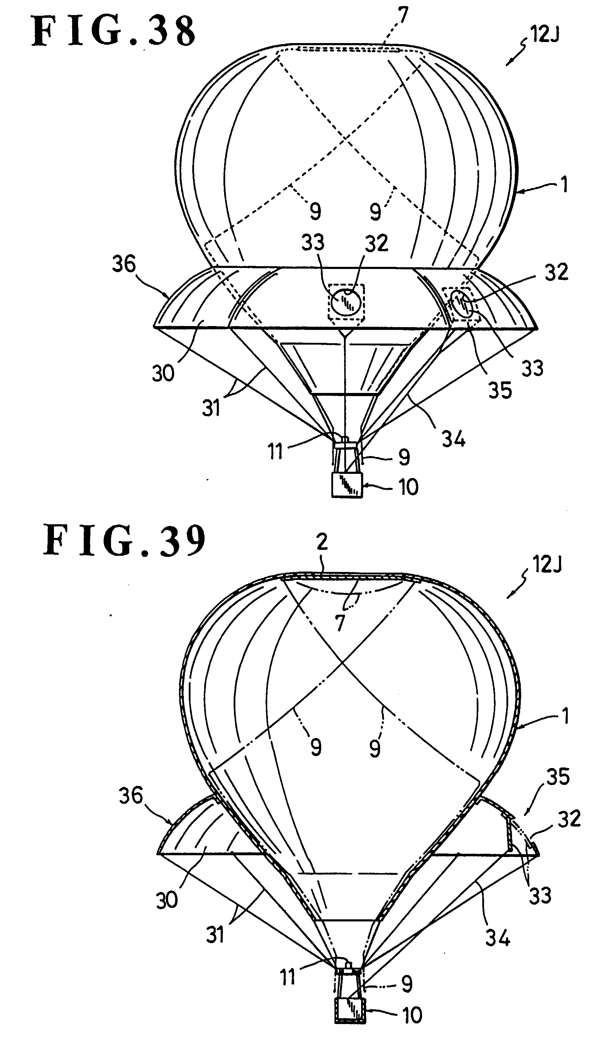

An eleventh embodiment of the present invention is shown in Figs. 38 to 39. It is distinguished from the first embodiment by the fact that the envelope 1, the same as used previously, is used without the flexible gas storage tube/frame 4. A parachute balloon 12J according to the eleventh embodiment will have similar advantages to that according to the first embodiment.

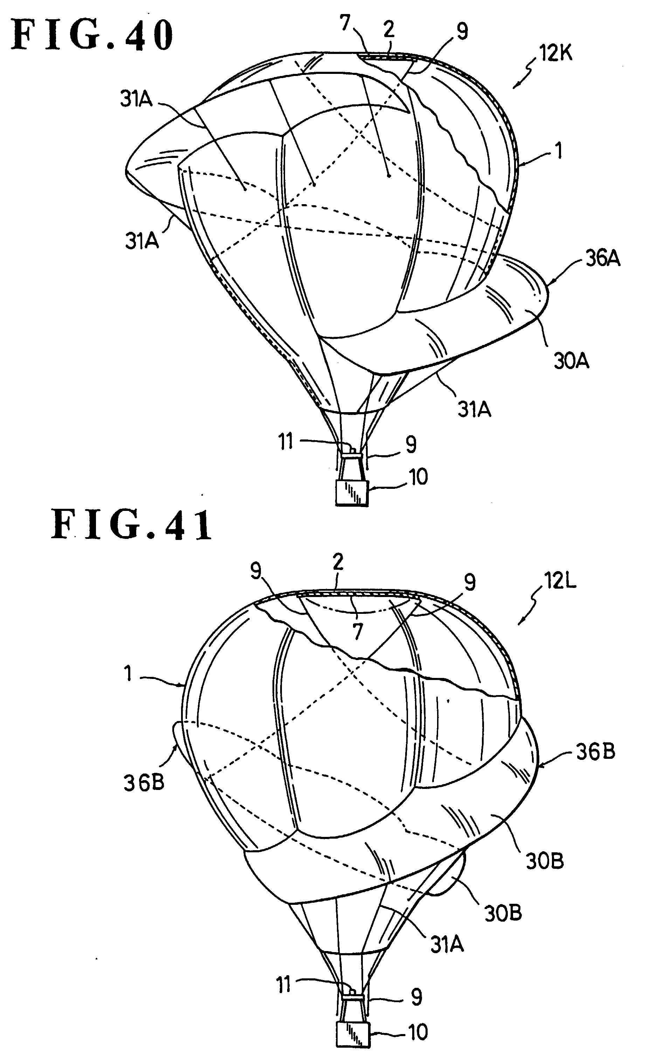

A twelfth embodiment of the present invention is shown in Fig. 40. It is distinguished from the second embodiment by the fact that the envelope 1, the same as used previously, is once again without the flexible gas storage tube/frame 4. A parachute balloon 12K according to the twelfth embodiment will have similar advantages to that according to the second embodiment.

A thirteenth embodiment of the present invention is shown in Fig. 41. It is distinguished from the third embodiment by the fact that the envelope 1, the same as used previously, is used without the flexible gas storage tube/frame 4. A parachute balloon 12L according to the thirteenth embodiment will have similar advantages to that according to the third embodiment.

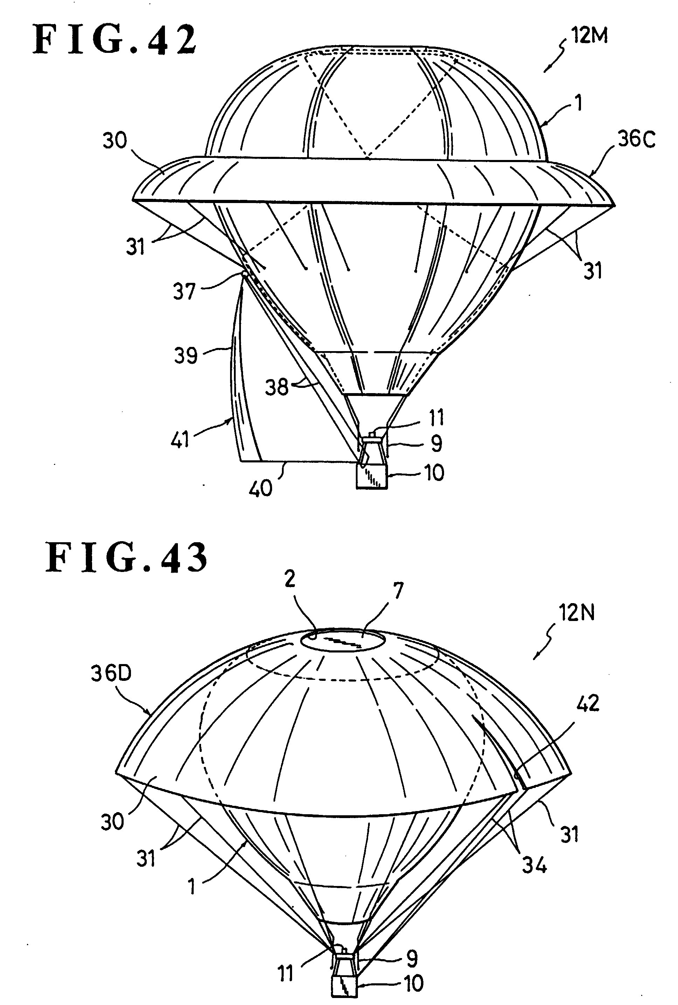

A fourteenth embodiment of the present invention is shown in Fig. 42. It is distinguished from the fourth embodiment by the fact that the envelope 1, the same as used previously, is used without the flexible gas storage tube/frame 4. A parachute balloon 12M according to the fourteenth embodiment will have similar advantages to that according to the fourth embodiment.

A fifteenth embodiment of the present invention is shown in Fig. 43. It is distinguished from the fifth embodiment by the fact that the envelope 1, the same as used previously, is used without the flexible gas storage tube/frame 4. A parachute balloon 12N according to the fifteenth embodiment will have similar advantages to that according to the fifth embodiment.

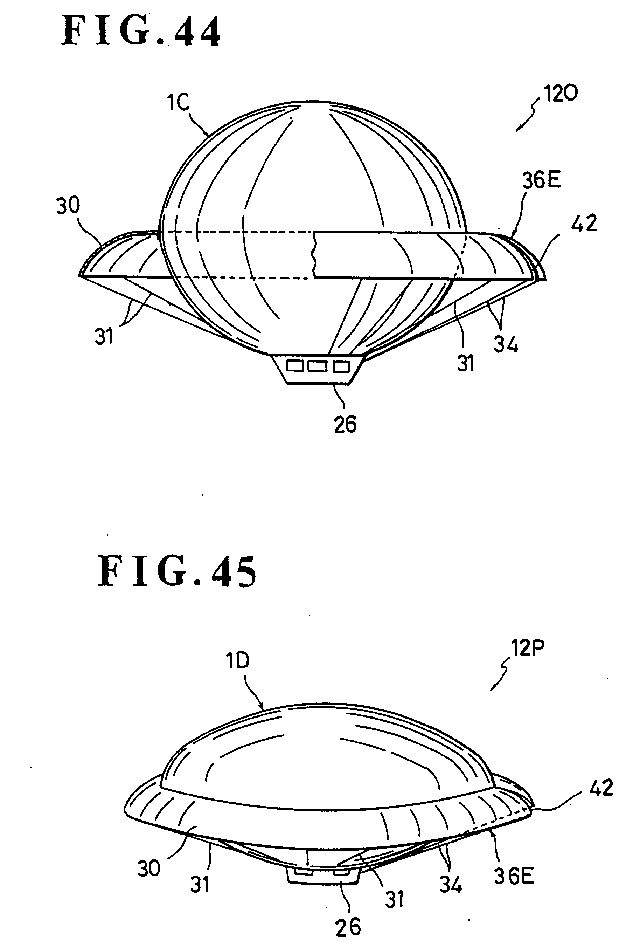

A sixteenth embodiment of the present invention is shown in Fig. 44. It is distinguished from the sixth embodiment by the fact that the envelope 1, the same as used previously, is used without the flexible gas storage tube/frame 4. A parachute balloon 120 according to the sixteenth embodiment will have similar advantages to that according to the sixth embodiment.

A seventeenth embodiment of the present invention is shown in Fig. 45. It is distinguished from the seventh embodiment by the fact that the envelope 1, the same as used previously, is used without the flexible gas storage tube/frame 4. A parachute balloon 12P according to the seventeenth embodiment will have similar advantages to that according to the seventh embodiment.

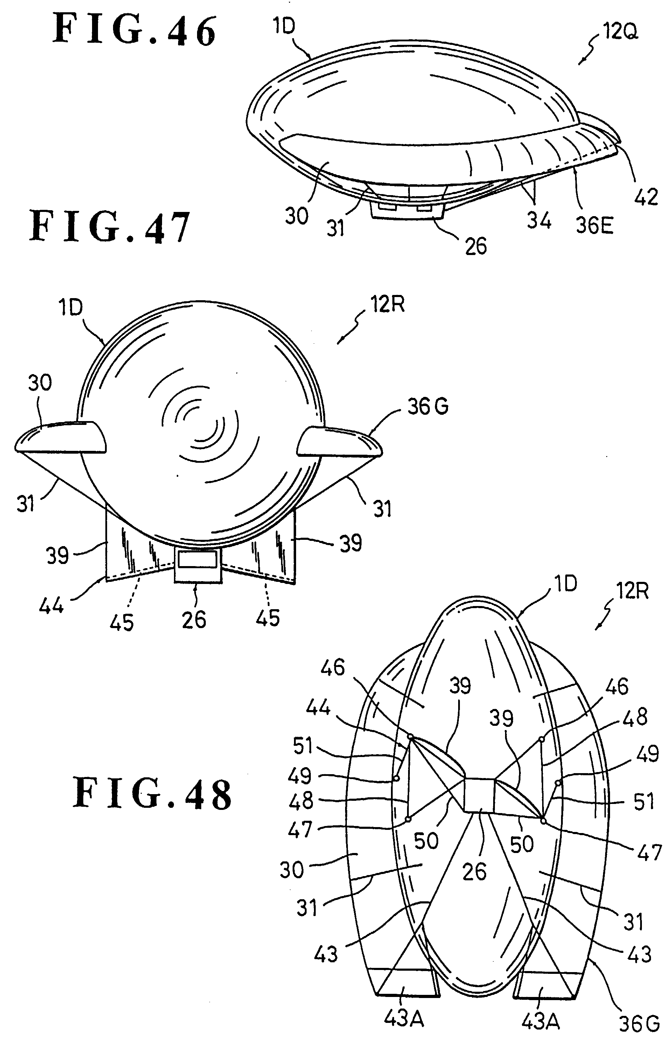

An eighteenth embodiment of the present invention is shown in Fig. 46. It is distinguished from the eighth embodiment by the fact that the envelope 1, the same as used previously, is used without the flexible gas storage tube/frame 4. A parachute balloon 12Q according to the eighteenth embodiment will have similar advantages to that according to the eighth embodiment.

A nineteenth embodiment of the present invention is shown in Figs. 47 to 48. It is distinguished from the ninth embodiment by the fact that the envelope 1, the same as used previously, is used without the flexible gas storage tube/frame 4. A parachute balloon 12R according to the nineteenth embodiment will have similar advantages to that according to the ninth embodiment.

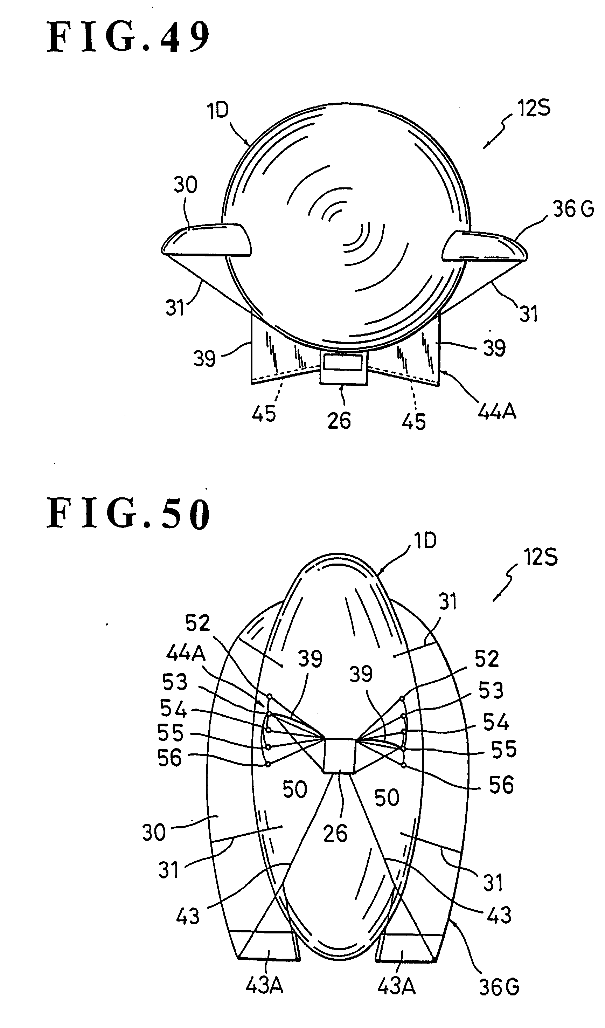

A twentieth embodiment of the present invention is shown in Figs. 49 to 50. It is distinguished from the tenth embodiment by the fact that the envelope 1, the same as used previously, is used without the flexible gas storage tube/frame 4. A parachute balloon 12S according to the twentieth embodiment will will have similar advantages to that according to the tenth embodiment.

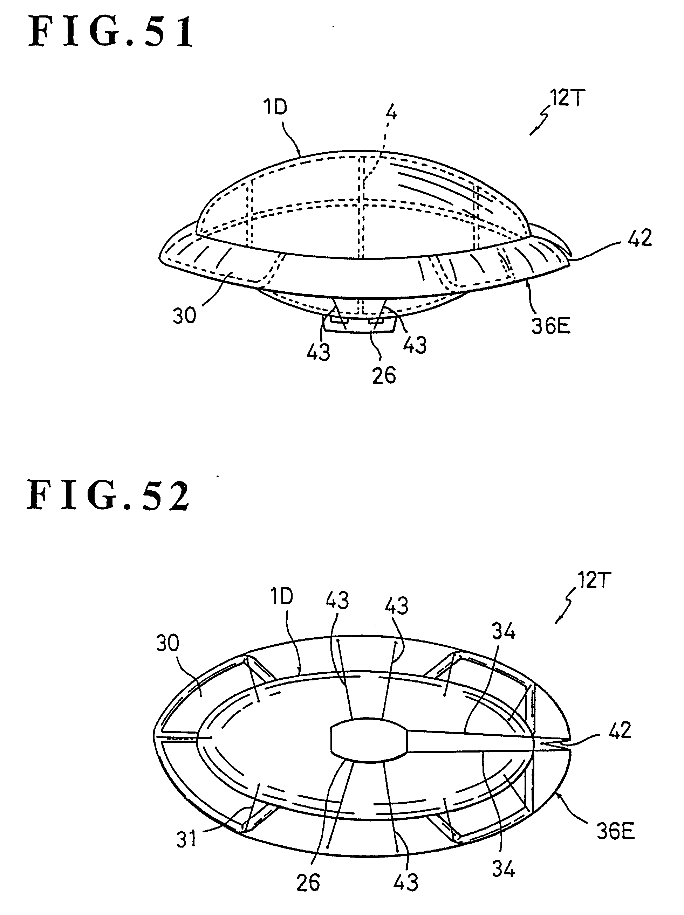

A twenty-first embodiment of the present invention is shown in Figs. 51 to 52. It is distinguished from the seventh embodiment by the fact that the parachute 36E having the contractable gas tube 4A is attached to part of the envelope 1 except that the contractable gas tube 4A does not encircle central portion of both sides of the envelope 1D. In addition, a plurality of operation ropes 43, 43 are attached; one end of the operation ropes is attached to the outside of the central portion of both sides of the parachute 36E. The operation ropes 43 can be pulled by the operator from the gondola 26. A parachute balloon 12T having such modifications can be controlled the falling direction by pulling the operation ropes 43, 43 from the gondola 25.

## Claims

1. A balloon (12) comprising:
an envelope (1) having the general shape of a balloon or airship when inflated;
a gondola (10) attached to the lower part of said envelope; and
parachute means (36) attached to said envelope.

2. A parachute balloon according to claim 1, wherein the envelope (1) is capable of being collapsed and put away when not in use.

3. A parachute balloon according to claim 1 or claim 2, wherein said parachute (36A) is in the shape of a helix, and wherein the inner edge of said parachute (36A) is attached externally to said envelope (1).

4. A parachute balloon according to claim 1 or claim 2, wherein said parachute means comprises a pair of parachutes (36B, 36B) in the shape of an arc, said pair of parachutes being attached externally to said envelope so that they face one another.

5. A parachute balloon according to claim 1 or claim 2, further comprising a device attached to said parachute for controlling the direction of descent.

6. A parachute balloon according to any one of claims 1, 2 and 5, wherein the parachute (36F) includes a flexible gas storage tube (4A) capable of maintaining the envelope in the expanded condition and means for enabling gas to be supplied into said flexible gas storage tube (4A).

7. A parachute balloon according to claim 5, wherein said device (35) for controlling the direction on descent comprises: two air vents (32) which are mounted to one side of said parachute (36); open-close valves (33) capable of opening and closing said air vents; and operating ropes (34) capable of opening and closing said open-close valves by operation from said gondola (10).

8. A parachute balloon according to claim 5, wherein said device for controlling the direction on descent comprises: a slit (42) which extends from the outer edge of said parachute (36D) and towards the top of said parachute (36D); and a plurality of operation ropes (34) which are attached to the outer edge of said parachute (36D) on opposing sides of said slit (42), and which enable opening and closing of said slit (42) from said gondola (10).

9. A parachute balloon according to claim 1 or claim 2, further comprising a sail (39) which is attached to said envelope (1) and to said gondola (10), means being provided to enable the position of said sail (39) to be altered so as to adjust the direction of flight of said parachute balloon (12).

10. A parachute balloon according to any one of claims 1, 2 and 9, wherein said envelope (1) includes a flexible gas storage tube (4) capable of maintaining the inflated condition of said envelope (1) and means for enabling gas to be supplied into said flexible gas storage tube (4).

11. A parachute balloon according to any one of claims 1, 2 and 9, wherein said parachute (36) is in the shape of a skirt and wherein the inner edge of said parachute (36) is circumferentially attached to said envelope (1) at a position which is approximately halfway up the vertical axis of said inflated envelope.

12. A parachute balloon according to any one of claims 1, 2 or 9, wherein said parachute (36D) is in the shape of an umbrella, the centre portion of said parachute (36D) being attached to a point on the top of said envelope.

13. A parachute balloon according to claim 1, substantially as described herein with reference to the accompanying drawings.
